# EUROPÄISCHE PATENTANMELDUNG

(11) **EP 4 335 668 A1**
(43) Veröffentlichungstag der Anmeldung: **13.03.2024**
(21) Anmeldenummer: 23195739.0
(22) Anmeldetag: 06.09.2023
(51) Int. Cl.: B60G 9/00, B60G 7/00, B60G 7/02, B60G 9/02, B60B 35/12, B62D 59/00, B62D 65/12

(54) **ACHSKONSTRUKTION FÜR EIN NUTZFAHRZEUG-FAHRWERK MIT EINER ALS GUSSTEIL AUSGEFÜHRTEN ACHSBRÜCKE**

(30) Priorität: 09.09.2022 DE 102022123040
(71) Anmelder: GIGANT GmbH, 49413 Dinklage (DE)
(72) Erfinder: Brunnberg, Klaus, 49377 Vechta (DE); Krieg, Tobias, 49134 Wallenhorst (DE)
(74) Vertreter: Weeg, Thomas

(57) **Zusammenfassung**

Die vorliegende Erfindung bezieht sich auf eine Achskonstruktion (6) für ein Nutzfahrzeug-Fahrwerk.

Um eine Achskonstruktion (6) zu schaffen, die einen ausreichenden Bauraum belässt, um das Nutzfahrzeug im Bereich der Achskonstruktion (6) mit einem elektrischen Antrieb zu versehen und die gleichwohl ein sicheres Fahrverhalten und einen hohen Fahrkomfort ermöglicht, wird vorgeschlagen, dass die Lenkerarme (8) einstückig oder mehrteilig ausgebildet sind und zumindest auf der den Schwenklagern (10) abgewandten Seite der Radachse (R) über eine zumindest teilweise als Gussteil ausgebildete Achsbrücke (22) miteinander verbunden sind.

## Beschreibung

Die vorliegende Erfindung bezieht sich auf eine Achskonstruktion für ein Nutzfahrzeug-Fahrwerk nach dem Oberbegriff des Anspruchs 1 sowie auf ein Nutzfahrzeug mit einer entsprechenden Achskonstruktion nach dem Oberbegriff des Anspruchs 14.

Aus der Schrift DE 101 63 628 A1 ist eine gattungsgemäße Achskonstruktion mit einer Achsbrücke bekannt. Die Räder werden über einen am Rad angeordneten Antriebsmotor angetrieben. Die Achsbrücke ist unterhalb der Radachse angeordnet, um in einem Niederflur-Omnibus einen möglichst tiefen Einstieg zu ermöglichen.

Aus der Schrift DE 35 26 272 A1 ist eine Achskonstruktion bekannt, bei der ein hohler Achsträger an seinen äußeren Enden die Radträger hält. Die Feder- und Dämpferelemente sind gegen die Radträger abgestützt. Der Achsträger ist als geschweißter Blechkasten ausgebildet.

Die Radaufhängungen sollen ein sicheres Fahrverhalten gewährleisten und Einbußen beim Fahrkomfort infolge Fahrbahnunebenheiten mildern. Dazu müssen sie die Räder bei Stößen elastisch nachgebend führen, ohne die Fahrwerkgeometrie merklich zu verändern und dabei einen möglichst langen Federweg haben, Schwingungen dämpfen und möglichst leicht sein, um die ungefederten Massen möglichst gering zu halten. Das gilt für Nutzfahrzeuge, auch in Gestalt von LKW-Trailern, in gleicher Weise wie für PKW.

Neuerdings stellt sich zusätzlich das Problem, dass eine für Nutzfahrzeuge bestimmte Achskonstruktion die Möglichkeit eröffnen soll, die Räder, die von der Achskonstruktion gehalten sind, mittels eines oder mehrerer Elektromotoren anzutreiben. Hier stellt sich allerdings das Problem, dass der in einem Nutzfahrzeug verfügbare Bauraum knapp bemessen ist, insbesondere wenn es sich bei dem Nutzfahrzeug um einen LKW-Trailer handelt. Die Baubreite und -höhe eines Nutzfahrzeugs ist bereits durch die gesetzlichen Zulassungsbestimmungen beschränkt. Die in einem Nutzfahrzeug verwendeten Räder müssen einen Raddurchmesser und eine Radbreite aufweisen, die groß genug sind, um die Masse des Nutzfahrzeugs mit seiner Ladung sicher auf dem Boden abstützen zu können. Durch die Breite der Räder und der Lenkerarme ist der dazwischen noch verfügbare Bauraum bereits erheblich eingeschränkt. Nach unten hin muss das Nutzfahrzeug auch noch über eine ausreichende Bodenfreiheit verfügen. Die Ladefläche des Nutzfahrzeugs kann nicht angehoben werden, weil sonst Frachtraum verloren ginge, der die Wirtschaftlichkeit des Nutzfahrzeugs beeinträchtigen würde. Die aus dem Stand der Technik vorbekannten Achssysteme sind aus diesen Gründen nicht dazu geeignet, im Zusammenhang mit einem elektrischen Antrieb verwendet zu werden. Insbesondere die gewöhnlichen Starrachsen können deshalb nicht in einer solchen Achskonstruktion verbaut werden.

Es ist die Aufgabe der vorliegenden Erfindung, eine Achskonstruktion zu schaffen, die einen ausreichenden Bauraum belässt, um das Nutzfahrzeug im Bereich der Achskonstruktion mit einem elektrischen Antrieb zu versehen und die gleichwohl ein sicheres Fahrverhalten und einen hohen Fahrkomfort ermöglicht.

Die Aufgabe wird für die gattungsgemäße Achskonstruktion durch die kennzeichnenden Merkmale des Anspruchs 1 und für das gattungsgemäße Nutzfahrzeug mit den kennzeichnenden Merkmalen des Anspruchs 14 gelöst.

Indem die Achsbrücke im Raum auf der den Schwenklagern abgewandten Seite der Radachse angeordnet ist, bleibt der Bauraum im Bereich der Radachse zwischen den Lenkerarmen frei. Auf ein von Rad zu Rad reichendes Achsrohr, das die Drehachsen der Räder direkt miteinander verbindet, kann verzichtet werden. Der dadurch frei gewordene Bauraum kann nun für Antriebskomponenten eines elektrischen Fahrantriebs für die von der Achskonstruktion gehaltenen Räder genutzt werden. Gleichwohl werden die beiden Lenkerarme durch die Achsbrücke miteinander verbunden.

Die Lenkerarme können ein- oder mehrteilig ausgeführt sein. Bei einer einteiligen Ausführung erstrecken sie sich als eine Schweißbaugruppe oder als ein einziges aus einem Stahlguss gegossenes Bauteil vom Schwenklager bis in den Bereich der Anbindung der Achsbrücke. Bei einer mehrteiligen Ausführung gibt es zwischen den einzelnen Teilen der Lenkerarme Teilungen, an denen die einzelnen Teile aber zu einem Lenkerarm zusammengefügt sind.

Die Lenkerarme sind jeweils in einem Schwenklager, das in einer rahmenseitigen Haltevorrichtung des Nutzfahrzeugs angeordnet ist, schwenkbeweglich gelagert. Indem die Lenkerarme über die Achsbrücke miteinander verbunden sind, insbesondere im Bereich der Abschnitte der Lenkerarme, die sich auf der von den Schwenklagern abgewandten Seite der Radachse befinden, ergibt sich eine bessere Spurführung für die an den Radträgern befestigten Räder. Die beiden Lenkerarme bilden zusammen mit der Achsbrücke eine U-förmige Schwinge, an der auf gegenüberliegenden Seiten die beiden Räder gehalten sind. Über die Achsbrücke werden auf die Achskonstruktion beim Fahren des Nutzfahrzeugs einwirkenden Querkräfte gut zwischen beiden Rädern und Lenkerarmen aufgeteilt. Durch die Achsbrücke wird die Neigung der Lenkerarme verringert, quer zur Fahrrichtung zu pendeln, wenn Querkräfte auf einen oder beide Lenkerarme einwirken.

Die Achsbrücke ist zumindest teilweise als ein Gussteil ausgebildet, das aus einem geeigneten gussfähigen Metall gegossen ist. Als geeignetes Material kommt insbesondere Gusseisen in Betracht. Gusseisen als ein besonders gut geeigneter Werkstoff für ein Gussteil ist ein Eisenwerkstoff mit einem hohem Kohlenstoffgehalt, der im Massenanteil über 2 % beträgt. Gusseisenteile sind besser korrosionsbeständig als Stahl. Gusseisen ist ein spröder Werkstoff mit guter Wärmeleitfähigkeit, guten Dämpfungseigenschaften und wegen der Sprödigkeit einer guten Formsteifigkeit. Aus Gusseisen hergestellte Bauteile verfügen zudem über eine hohe Druckfestigkeit.

Als Gussteil ist die Achsbrücke oder sind zumindest Teile der Achsbrücke in einer Gussform kostengünstig herstellbar. In die Gussform können Ausformungen integriert sein, für die bei einer Schweißkonstruktion gesonderte Bauteile hergestellt und an dem Grundkörper der Achsbrücke montiert werden müssten. Der Montageaufwand kann durch die Funktionsintegration von anderen Bauteilen in den Gusskörper also verringert werden. Der Gusskörper einer Achsbrücke kann zudem hohe Lasten aufnehmen und verfügt über eine hohe Materialfestigkeit gegenüber Stößen und Schlägen aus dem Fahrwerk bei der Fahrt des Nutzfahrzeugs. Die Gestaltung der Form des Gusskörpers kann sich viel dichter am Verlauf der auf ihn einwirkenden Kraftlinien orientieren. Auch die einzelnen Bereiche der Bauteile können von der Materialdicke und -verteilung her besser und einfacher an die Kraftverläufe der einwirkenden Kräfte angepasst werden. Dadurch ist es möglich, Material und Gewicht bei gleicher Funktionssicherheit einzusparen.

Aufgrund der vorstehend beschriebenen Eigenschaften ist Gusseisen als Werkstoff für ein Fahrwerksteil eines Nutzfahrzeugs gut geeignet.

Die Achsbrücke, aber auch die Lenkerarme können als Gussteile durch eine entsprechend bestimmte Form belastungsgerecht konstruiert und ausgeformt werden. Dabei bestehen bei Gussteilen erheblich größere Spielräume, Bauteile von ihrer Form und von den Wandstärken her an die geometrischen und statischen Erfordernisse anzupassen, als das bei einem Schweißbauteil zu vertretbaren Kosten möglich wäre. Insbesondere können die jeweiligen Teile so konstruiert werden, wie es auf Basis von FEM-Berechnungen unter Berücksichtigung der einwirkenden Kräfte und der Geometrie der Bauteile erforderlich erscheint. Bei der FEM-Berechnung wird eine numerische Festigkeits- und Verformungsuntersuchung der Teile mit einer geometrisch komplexen Form durchgeführt. Logisch basiert die FEM auf dem numerischen Lösen eines komplexen Systems aus Differentialgleichungen. Das zu berechnende Teil wird in endlich viele Teilkörper einfacher Form aufgeteilt, beispielsweise in viele kleine Quader oder Tetraeder. Ihr physikalisches Verhalten kann aufgrund ihrer einfachen Geometrie mit bekannten Ansatzfunktionen gut berechnet werden. Das physikalische Verhalten des Gesamtkörpers wird anhand einer rechnerischen Betrachtung nachgebildet, wie diese Elemente auf die Kräfte, Lasten und Randbedingungen reagieren und wie sich Lasten und Reaktionen beim Übergang von einem Element ins benachbarte fortpflanzen durch ganz bestimmte problemabhängige Stetigkeitsbedingungen, die die Ansatzfunktionen erfüllen müssen. Dort, wo sich Schwächen in der Konstruktion zeigen, kann gezielt nachgebessert werden, und dort, wo die Konstruktion überdimensioniert ist, kann reduziert werden. Ein Gussteil kann insbesondere an den belasteten Stellen an die im Gebrauch auftretenden Belastungen von seiner Form und technischen Auslegung her besser angepasst werden als ein geschweißtes oder geschraubte Blechteil, das Gussteil verfügt insoweit über eine optimale Topologie.

Die Achsbrücke ist dabei insbesondere so ausgelegt, dass sie im Zusammenwirken mit den Lenkerarmen ein einseitiges Ein- oder Ausfedern eines Lenkerarms auf einer Fahrzeugseite zulässt, ohne dabei den auf der anderen Fahrzeugseite befindlichen Lenkerarm in gleicher Weise mit nach oben zu ziehen oder nach unten zu drücken. Die Achsbrücke ist zwar bevorzugt biegesteif konstruiert, sie kann aber - genauso wie die Lenkerarme - in einem geringen Umfang bei einseitig einwirkenden Belastungen Torsionsbewegungen ausführen, wodurch die einwirkenden Kräfte zumindest teilweise kompensiert werden. Ein einseitiges Ein- oder Ausfedern bleibt dadurch möglich. Das gilt insbesondere dann, wenn die Lagerbuchsen der Schwenklager, in denen die Lenkerarme nach ihrem Einbau in ein Nutzfahrzeug in einer rahmenseitigen Haltevorrichtung gehalten werden, weich ausgelegt sind.

Nach einer Ausgestaltung der Erfindung weist die Achsbrücke zumindest zwei jeweils als Gussteil gefertigte äußere Armabschnitte sowie einen die äußeren Armabschnitte miteinander verbindenden Mittelabschnitt auf. Da gerade die äußeren Armabschnitte bei der Fahrt des Nutzfahrzeugs mechanisch besonders belastet sind, können die Vorteile des Stahlguss-Werkstoffs durch die Ausführung der äußeren Armabschnitte aus Stahlguss an dieser Stelle besonders gut genutzt werden. Der die beiden äußeren Armabschnitte verbindende Mittelabschnitt schafft eine Teilung zwischen den beiden Armabschnitten und kann als Gussteil oder als eine Schweißbaugruppe ausgeführt sein. Über eine Schweißbaugruppe ist es ohne hohe Werkzeugkosten für Gusswerkzeuge möglich, verschiedene Achsversionen im Rahmen eines Baukastens darzustellen. Es können auch verschiedene Gussteile vorgesehen sein, um die Armabschnitte miteinander zu verbinden. Die äußeren Armabschnitte bleiben dabei gleich, und die Variation in der Tragkraft, Breite, den Anbaumöglichkeiten anderer Komponenten und anderen technischen Parametern der Achskonstruktion können über unterschiedliche Gestaltungen des Mittabschnitts dargestellt werden. Der Mittelabschnitt kann mit den äußeren Armabschnitten über eine jeweilige Schraubverbindung verbunden sein.

Nach einer Ausgestaltung der Erfindung hat der Mittelabschnitt an seinen den Armabschnitten zugewandten Enden gabelförmige Aufnahmen, in denen das dem Mittelabschnitt zugewandte Ende des jeweiligen Armabschnitts gehalten ist. Die gabelförmigen Aufnahmen schaffen eine hoch belastbare Verbindung zwischen dem Mittelabschnitt und den Armabschnitten.

Nach einer Ausgestaltung der Erfindung sind die Lenkerarme als Gussteile ausgebildet. Auch Lenkerarme, die als Gussteil ausgebildet sind, können ein- oder mehrteilig ausgeführt sein. Für die Ausführung der Lenkerarme als Gussteile gelten die vorstehend beschriebenen Vorteile für eine Achsbrücke als Gussteil entsprechend.

Nach einer Ausgestaltung der Erfindung sind die Lenkerarme jeweils zumindest zweiteilig ausgeführt, wobei sich ein jeweiliges vorderes Teil vom Schwenklager bis zur Anbindungszone der Radträger und ein jeweiliges hinteres Teil von der Anbindungszone der Radträger bis zur Anbindungszone der Achsbrücke erstrecken. Dabei können die Radträger ganz vom vorderen, ganz vom hinteren oder von beiden Teilen gehalten sein. Das hintere Teil verfügt über einen Tragabschnitt zur Verbindung des jeweiligen Lenkerarms mit einem Federelement, wie beispielsweise einem Luftfederbalg. Bei dieser Aufteilung der einzelnen Teile, die zusammen einen Lenkerarm bilden, können die jeweiligen Teile wie vorstehend beschrieben belastungsgerecht konstruiert und ausgeformt werden. Hier gelten für Gussteile die bereits vorstehend beschriebenen Vorteile.

Nach einer Ausgestaltung der Erfindung sind in den hinteren Teilen der Lenkerarme jeweils ein Anbindungselement zur Verbindung mit einem Federelement und ein Anbindungselement zur Verbindung mit der Achsbrücke integriert. Durch die Funktionsintegration wird die Montage der Achskonstruktion vereinfacht. Mögliche Fehlerquellen bei der Montage werden verringert.

Nach einer Ausgestaltung der Erfindung ist im Anstoßbereich der Teile des jeweiligen Lenkerarms, der Achsbrücke und/oder der Radträger mit einem anderen Bauteil der Achskonstruktion eine Schnittstelle ausgebildet, über die die Teile nach ihrem Zusammenbau in einer Solllage über eine Schraubverbindung fest miteinander verbunden sind. Die Verbindung ist dergestalt ausgelegt, dass die Verbindung auch die einwirkenden Kräfte aufzunehmen und an andere Bauteile abzuleiten vermag. Über die Schnittstelle ist es möglich, unterschiedlich dimensionierte Teile aus einem Baukasten zu einer Achskonstruktion zu verbinden. So ist es beispielsweise möglich, dass die Nutzfahrzeuge, in denen eine jeweilige Achskonstruktion verwendet werden soll, für unterschiedliche Nutzlasten zugelassen sind, mit oder ohne einen Antrieb ausgestattet sein sollen, eine unterschiedliche Spurweite aufweisen, unterschiedlich große Räder aufweisen, für onroad- oder offroad-Anwendungen vorgesehen sind, und dergleichen. Je nach dem voraussichtlichen Nutzungsprofil des Nutzfahrzeugs, das mit einer Achskonstruktion versehen werden soll, können die einzelnen Teile der Lenkerarme und der Achsbrücke für eine Achskonstruktion aus einem Teilebaukasten zusammengebaut werden, in dem Bauteile enthalten sind, die zu dem voraussichtlichen Nutzungsprofil passen und genau auf den jeweiligen Anwendungsfall hin ausgelegt sind. Die Schnittstelle stellt sicher, dass die jeweiligen Bauteile zueinander passen. Der Kernbausatz für eine Achskonstruktion besteht bei einteiligen Lenkerarmen aus zwei Lenkerarmen und einer Achsbrücke, wobei für die entsprechenden Teile im Teilebaukasten mehrere unterschiedlich dimensionierte Teile vorgehalten werden. Bei zweiteiligen Lenkerarmen besteht der Kernbausatz für eine Achskonstruktion aus zweimal dem vorderen Teil des Lenkerarms, zweimal dem hinteren Teil des Lenkerarms und einer Achsbrücke.

Nach einer Ausgestaltung der Erfindung ist im mittleren Bereich der Achsbrücke eine Befestigungskonsole zur Anbindung von Lenkerstreben ausgebildet. Über die Lenkerstreben werden die Räder mit einem gewünschten Radsturz auf der Fahrbahn gehalten, nachdem die Achskonstruktion in ein Nutzfahrzeug eingebaut worden ist. Als Sturz bezeichnet man den Winkel zwischen der Radmittelebene und einer Senkrechten auf die Fahrbahn. Seitenführungskräfte können beim rollenden Reifen nur entstehen, wenn Schräglaufwinkel und/oder Sturz vorhanden ist. Durch Sturz stellt sich eine günstige Spannungsverteilung der Profilteilchen in der Reifenaufstandsfläche ein. Bei mehrspurigen Fahrzeugen wie Nutzfahrzeugen werden Grundsturz und Sturzänderung zur partiellen Kompensation des Sturzwinkels zur Straße eingesetzt, der sich am kurvenäußeren Rad durch die Wankneigung des Fahrzeugs ergibt. Bei Einzelradaufhängungen ändert sich - abhängig vom Achsprinzip und der Kinematik der Achse - der Sturz über dem Federweg. Dagegen bleibt bei Starrachsen der Sturz zur Straße bei Kurvenfahrt näherungsweise konstant Bei einer Achskonstruktion, in der ein gewöhnliches Achsrohr ersetzt worden ist durch eine Achsbrücke, die um ein Maß versetzt zur Radachse angeordnet ist, ergeben sich aufgrund des Versatzes der Achsbrücke zur Radachse bei Kurvenfahrt und einseitigen ein- und Ausfederbewegungen der Räder wiederum Sturzveränderungen an den Rädern, die durch Torsionsbewegungen in den Lenkerarmen und/oder der Achsbrücke verursacht werden. In einer Achskonstruktion für eine angetriebene Achse, in der ein gewöhnliches Achsrohr fehlt und die Verbindung der schwenkbeweglichen Lenkerarme mit den daran befestigten angetriebenen Rädern über eine zur Radachse versetzt angeordnete Achsbrücke hergestellt wird, ist eine zusätzliche Führung der Räder und eine Lösung zur Weiterleitung der Radkräfte deshalb erforderlich. Bei der Auslegung von Achskonstruktionen für Nutzfahrzeuge, insbesondere auch bei luftgefederten Achskonstruktion, ist es zudem wichtig, die auftretenden Seitenkräfte sinnvoll abzuleiten. Insbesondere bei Kurvenfahrt wird die Achsbrücke stark auf Biegung beansprucht. Das gilt insbesondere auch bei angetriebenen Achsen in einem Fahrzeug.

Die erstmalige Einstellung des Sturzes der Räder auf einen gewünschten Wert bei der Montage der Achskonstruktion an einem Nutzfahrzeug und die Beibehaltung eines gewünschten Radsturzes der angetriebenen Räder während der Fahrt des Nutzfahrzeugs sowie die Übertragung und der Ausgleich der bei der Fahrt des Nutzfahrzeugs auftretenden Radkräfte ist nun über die Lenkerstreben möglich, die über die Befestigungskonsole mit der Achsbrücke verbunden werden können. Um die Räder in einem gewünschten Sturzwinkel zu halten und die bei der Fahrt des Nutzfahrzeugs auftretenden Kräfte aufzufangen, ist die Befestigungskonsole im mittleren Bereich der Achsbrücke ausgebildet. An der Befestigungskonsole können Lenkerstreben mit ihrem ersten Ende befestigt werden, die an ihrem zweiten Ende mit einem der Lenkerarme verbunden sind. Die an der Befestigungskonsole mit einem ersten Ende befestigten Lenkerstreben leiten bei Kurvenfahrt die auf die Achsbrücke einwirkenden Biegekräfte in die Lenkerarme ein, an denen die Radträger und die angetriebenen Räder befestigt sind. Die Achsbrücke wird dadurch weniger belastet. Die Lenkerarme leiten die aus den Lenkerstreben auf sie einwirkenden Kräfte auf die Räder und den Fahrzeugrahmen ab. Die Lenkerstreben sind dabei bevorzugt so mit den Befestigungspunkten verbunden, dass sie um zumindest eine Achse beweglich sind, um sich zusammen mit den Lenkerarmen bei Ein- oder Ausfederbewegungen der Lenkerarme während der Fahrt des Nutzfahrzeugs auf- und abwärts mitbewegen zu können.

Nach einer Ausgestaltung der Erfindung ist die Befestigungskonsole als ein unterhalb der Oberkante der Achsbrücke angeordneter Vorsprung ausgebildet, der sich in einer Richtung quer zur Erstreckungsrichtung der Achsbrücke erstreckt, wobei die Lenkerstreben eine Längenverstellvorrichtung aufweisen und an dem Vorsprung Befestigungselemente zur Befestigung von Lenkerstreben ausgebildet sind, deren Zugrichtung aus einer Ansicht von oben in einem Winkel < 45° und > 0° zur Erstreckungsrichtung der Achsbrücke ausgerichtet ist.

Durch den Vorsprung können die Lenkerstreben in einer Höhe an der Achsbrücke angreifen, die tiefer liegt als die Oberseite der Achsbrücke. Über den dadurch ermöglichten längeren Hebel können die Lenkerstreben höhere Kräfte aufnehmen.

Die Lenkerstreben weisen eine Längenverstellvorrichtung auf. Mit dem Lenkerstreben ist es möglich, den Sturz der Räder der Achskonstruktion nach dem Anbau der Achskonstruktion an ein Nutzfahrzeug auf einen gewünschten Wert einzustellen. Die Lenkerstreben können eine zu einem gewünschten Sturz der Räder passende feste passende Länge aufweisen. Es ist aber auch möglich, den Sturz der Räder einstellbar auszuführen, indem die Länge der Lenkerstreben mit der Längenverstellvorrichtung auf eine passende Länge eingestellt wird. Die Längenverstellung kann beispielsweise durch teleskopier- und in einer jeweiligen Auszugsstellung festlegbare Rohre, durch eine längenveränderlich einstellbare Spannschraube oder andere geeignete Längenverstellvorrichtungen erfolgen. Die Länge der Lenkerstreben, die mit einer Längenverstellvorrichtung versehen sind, kann nicht nur bei der Montage der Achskonstruktion an einem Fahrzeug, sondern auch nachträglich während der Nutzung des Fahrzeugs auf einen gewünschten Wert eingestellt werden.

Durch eine Zugrichtung der Lenkerstreben, deren Zugrichtung aus einer Ansicht von oben in einem Winkel < 45° und > 0° zur Erstreckungsrichtung der Achsbrücke ausgerichtet ist. Die Ausrichtung der Zugrichtung der Befestigungselemente in dem angegebenen Winkelbereich kann erfolgen, indem die Befestigungselemente entsprechend schräg zu einer Halteplatte ausgerichtet sind, an der die Befestigungselemente befestigt sind, und/oder die Halteplatte, an der die Befestigungselemente befestigt sind, in einer Winkellage zur Erstreckungsrichtung der Achsbrücke angeordnet ist, aus der sich der angegebene Zugrichtungswinkel ergibt. Durch eine Zugrichtung der Lenkerstreben, die aus einer Ansicht von oben auf die Achsbrücke in einem Winkel < 45° zur Erstreckungsrichtung der Achsbrücke ausgerichtet sind, bilden eine jeweilige Lenkerstrebe, der von der jeweiligen Lenkerstrebe abgestrebte Abschnitt der Achsbrücke und der Abschnitt des Lenkerarms zwischen seiner Anbindung an die Achsbrücke bis zu der Stelle, an der die jeweilige Lenkerstrebe an dem Lenkerarm angreift, ein Kräftedreieck, über das sich die auf diese Bauteile einwirkenden Kräfte gut verteilen. Die Lenkerstreben können dadurch die Achsbrücke in eine Richtung quer zur Längserstreckungsrichtung des Fahrzeugs effektiv abstützen und die Räder bei der Fahrt des Nutzfahrzeugs in einem gewünschten Sturzwinkel halten. Indem der Winkel > 0° ist, können die Lenkerstreben nicht nur Querkräfte von der Achsbrücke auf den Rahmen übertragen, sondern auch Längskräfte. Die Befestigungsmittel können beispielsweise als Schraubbolzen ausgeführt sein, auf die eine Lenkerstrebe aufgeschraubt werden kann. Es können aber auch hakenartig oder auf eine sonstige geeignete Weise ausgebildete Befestigungsmittel vorgesehen sein.

Nach einer Ausgestaltung der Erfindung sind an dem Vorsprung auf gegenüberliegenden Seiten Befestigungselemente zur Befestigung von Lenkerstreben ausgebildet, an denen auf jeder Seite des Vorsprungs zumindest jeweils eine Lenkerstrebe drehbeweglich und/oder gelenkig mit dem oder den zugehörigen Befestigungselementen verbunden ist und sich diese Lenkerstrebe vom zugehörigen Befestigungselement aus in der Montage- und Ruhestellung der Achskonstruktion in einem Nutzfahrzeug bis zum Anbindungspunkt der Lenkerstrebe an dem dieser Lenkerstrebe zugehörigen Lenkerarm hin in einem Anstellwinkel erstreckt, der um ein Winkelmaß von der direkten Linie zwischen dem zugehörigen Befestigungspunkt und dem Radmittelpunkt im zugehörigen Rad abweicht. Durch die Anordnung der Befestigungselemente auf gegenüberliegenden Seiten des Vorsprungs ist es möglich, die auf die Achskonstruktion bei Kurvenfahrt des Fahrzeugs einwirkenden Querkräfte auf beide Seiten des Fahrzeugrahmens zu übertragen. Je nach Wirkrichtung einer Querkraft werden dabei die auf einer ersten Seite des Vorsprungs angeordneten Befestigungselemente auf Zug und die auf der zweiten Seite des Vorsprungs angeordneten Befestigungselemente auf Druck belastet. Durch die beidseitige Einleitung der Querkräfte in den Fahrzeugrahmen ergibt sich eine sehr gute Abstützung der Achskonstruktion bei Kurvenfahrt. Würde sich die Lenkerstrebe in der Ruhestellung in einer räumlichen Lage befinden, die identisch ist zur direkten Linie zwischen dem zugehörigen Befestigungspunkt und dem Radmittelpunkt im zugehörigen Rad, würde sich bei einer Ein- oder Ausfederbewegung des zugehörigen Lenkerarms mit dem daran befestigten Rad die effektive Länge der Lenkerstrebe aufgrund der Rotation der Lenkerstrebe um das Scharnier oder Gelenk in gleicher Weise verkürzen. Durch die in der Montage- und Ruhestellung der Achskonstruktion in einem Nutzfahrzeug in einem von der direkten Linie zwischen dem zugehörigen Befestigungspunkt und dem Mittelpunkt der Radachse im zugehörigen Rad in einem Anstellwinkel abweichenden Lage der Lenkerstrebe verändert sich deren effektive Länge vom Befestigungspunkt bis zum Anbindungspunkt am Lenkerarm allerdings, wobei sich je nach Federrichtung eine Verlängerung oder Verkürzung der effektiven Länge der Lenkerstrebe ergibt, weil die Lenkerstrebe sich bei einer Ein- oder Ausfederbewegung des Lenkerarms um das am Befestigungselement befindliche Scharnier oder Gelenk dreht. Dieser Effekt kann genutzt werden, um den Sturzwinkel des entsprechenden Rades in einer gewünschten Weise zu beeinflussen.

Auf jeder Seite des Vorsprungs können jeweils zumindest zwei Lenkerstreben angeordnet sein, die den Vorsprung von einem jeweiligen Befestigungselement aus mit einem zugeordneten Lenkerarm verbinden, und die Lenkerstreben so ausgerichtet sind, dass die erste der beiden Lenkerstreben von der direkten Linie zwischen dem zugehörigen Befestigungspunkt und dem Radmittelpunkt im zugehörigen Rad zum Lenkerarm hin nach oben und die zweite der beiden Lenkerstreben von der direkten Linie zwischen dem zugehörigen Befestigungspunkt und dem Radmittelpunkt im zugehörigen Rad zum Lenkerarm hin nach unten abweicht. Die zumindest zwei Lenkerstreben bewegen sich bei dieser spezifischen Anordnung bei einer Ein- oder Ausfederbewegung jeweils in entgegengesetzte Richtungen, wodurch diese ein Kippmoment auf den Lenkerarm und damit auch auf das daran befestigte Rad erzeugen. Dieses Kippmoment kann dazu genutzt werden, das Rad bei einer Ein- bzw. Ausfederbewegung des Lenkerarms in einem gewünschten Sturzwinkel zu halten.

Nach einer Ausgestaltung der Erfindung ist an der Achsbrücke ein Befestigungselement zur Anbindung eines Spurführungsmittels ausgebildet. Anders als die Lenkerstreben dienen die Spurführungsmittel dem Zweck, bei der Fahrt des Nutzfahrzeugs die Spur der Räder der Achskonstruktion günstig zu beeinflussen. Durch unterschiedlich starke Ein- und Ausfederbewegungen der Lenkerarme auf gegenüberliegenden Seiten des Fahrzeugrahmens sowie durch Torsionsbewegungen des Fahrzeugrahmens kann sich die Spur der Räder verändern. Das mit der Achskonstruktion ausgestattete Fahrzeug könnte dadurch einen Eigenlenkverhalten zeigen, das einem sicheren Fahrverhalten abträglich ist. " Relativbewegungen der Achskonstruktion zwischen Antriebswellen, Getriebe und Achsbrücken quer zur Fahrzeugrichtung werden reduziert. Um dem entgegenzuwirken, ist an der Achsbrücke ein Befestigungselement zur Anbindung eines Spurführungsmittels vorgesehen. Bevorzugt ist das Befestigungselement zur Anbindung eines Spurführungsmittels in der Mitte der Achsbrücke angeordnet, um die vom Spurführungsmittel in die Achsbrücke eingeleiteten Kräfte gleichmäßig auf beide Seiten der Achskonstruktion zu übertragen.

Nach einer Ausgestaltung der Erfindung ist das Befestigungselement eine Welle zur Verbindung mit einem Wattgestänge. Auf die Welle kann das drehbare Gelenk des Wattgestänges aufgesetzt werden. Bei einem Wattgestänge bleibt die Achse beim Aus- und Einfedern in der Mitte stehen. Sie nutzt den Effekt, den das Watt-Parallelogramm beschreibt. Die Querlenker sind auf einer Seite am Rahmen fixiert. Die anderen beweglichen Enden sind über ein drehbares Gelenk mit der Achse verbunden. Die seitlichen Hubbewegungen entstehen durch den Radius, den die beweglichen Enden der beiden Querlenker beim Aus- und Einfedern durchlaufen. Sie ziehen dabei aber die Achse nicht nach außen, da das drehbare Gelenk den Längenausgleich ermöglicht und so die Achse in der Mitte hält.

Nach einer Ausgestaltung der Erfindung ist das Befestigungselement zur Anbindung eines Spurführungsmittels auf der zur Befestigungskonsole zur Anbindung von Lenkerstreben gegenüberliegenden Seite der Achsbrücke angeordnet. Durch die Anordnung dieser Bauteile auf gegenüberliegenden Seiten der Achsbrücke stören sich die Lenkerstreben und die Bauteile der Spurführung nicht gegenseitig. Die von den Lenkerstreben und dem Spurführungsmittel in die Achsbrücke eingeleiteten Kräfte werden jeweils optimal in die Achsbrücke eingeleitet.

Es wird darauf hingewiesen, dass die vorstehend aufgeführten Ausgestaltungen der Erfindung jeweils für sich, aber auch untereinander mit dem Gegenstand des Anspruchs 1 und den übrigen Unteransprüchen kombiniert werden können, soweit dem keine technischen Hindernisse entgegenstehen und keine zwingenden Abhängigkeiten gegeben sind.

Weitere Abwandlungen und Ausgestaltungen der Erfindung lassen sich den Ansprüchen, der Beschreibung und den Zeichnungen entnehmen.

Die Erfindung soll nachfolgend anhand eines Ausführungsbeispiels näher erläutert werden. Es zeigen:
- Figur 1:: eine Gesamtansicht auf einen in einem Nutzfahrzeug installierten elektrischen Antriebsstrang von schräg unten,
- Figur 2:: eine Ansicht auf die Achskonstruktion von oben,
- Figur 3:: eine Ansicht auf die Achskonstruktion von hinten, und
- Figur 4:: eine Ansicht auf eine Achskonstruktion aus einer Ansicht von schräg hinten und oben mit einer teilweise als Gussteil ausgeführten Achsbrücke.

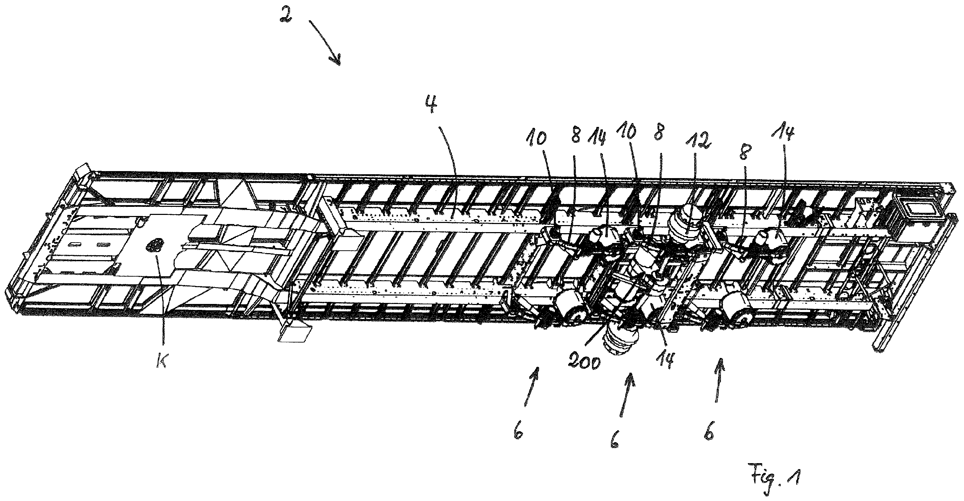

Die Fig. 1 zeigt eine Gesamtansicht auf ein Nutzfahrzeug 2 in Gestalt eines LKW-Trailers von schräg unten, in den ein elektrischer Antriebsstrang 200 eingebaut ist. Das Nutzfahrzeug 2 verfügt über einen Fahrzeugrahmen 4, der im Ausführungsbeispiel über drei Achskonstruktionen 6 auf dem Boden abgestützt ist. Die mittlere Achskonstruktion 6 verfügt über den elektrischen Antriebsstrang 200, bei den beiden anderen Achskonstruktionen ist aus Gründen der zeichnerischen Vereinfachung die Achsbrücke beziehungsweise die Achse weggelassen. Im Frontbereich wird das Nutzfahrzeug mit dem Königszapfen 16 auf die Sattelkupplung eines zeichnerisch nicht näher dargestellten Sattelschleppers aufgelegt und darüber gezogen.

Die Achskonstruktionen 6 weisen jeweils auf gegenüberliegenden Seiten des Fahrzeugrahmens 4 einen Lenkerarm 8 auf, der jeweils über ein in einer Haltekonsole angeordnetes Schwenklager 10 mit dem Fahrzeugrahmen 4 verbunden ist. An dem Lenkerarm 8 ist jeweils auch ein Radträger 12 befestigt, an dem dann die Räder des Nutzfahrzeugs 2 angeschraubt werden können. An ihrem dem Schwenklager 10 abgewandten Ende werden die Lenkerarme 8 noch jeweils über ein Federelement 14 am Fahrzeugrahmen 4 abgestützt. Die Lenkerarme 8 rotieren also bei Federbewegungen um die Schwenklager 10 und federn dabei gegen die Rückstellkräfte in den flexiblen Federelementen 14.

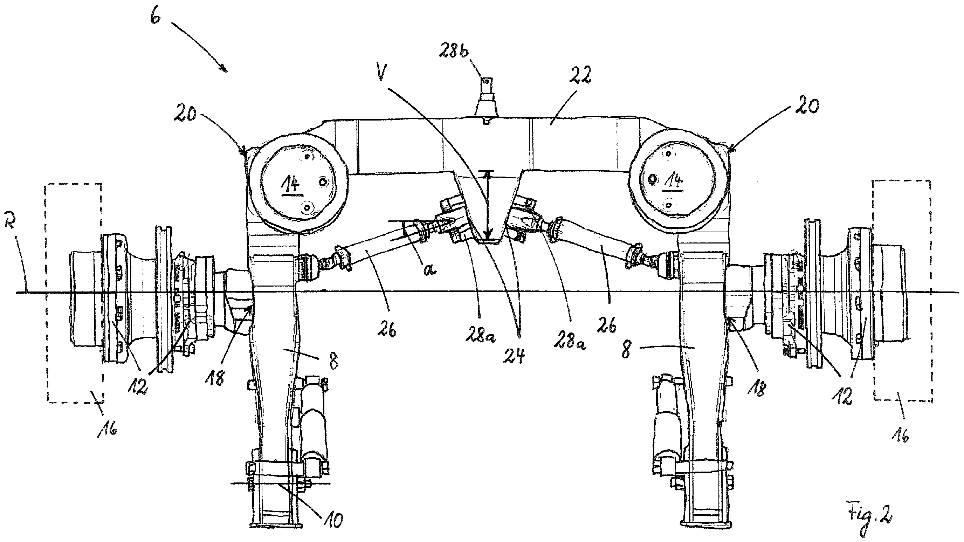

In Fig. 2 ist eine Ansicht auf die Achskonstruktion 6 von oben gezeigt. In dieser Ansicht ist die Radachse R gut erkennbar, deren räumliche Lage von Drehachsen von zumindest zwei an gegenüberliegenden Seiten der Achskonstruktion 6 angeordneten Rädern 16 bestimmt ist. Die Räder 16 sind jeweils über einen Radträger 12 an einem damit verbundenen Lenkerarm 8 gehalten. Die Lenkerarme 8 sind entlang der Radachse R beabstandet voneinander angeordnet und jeweils in einer Richtung quer zur Radachse R ausgerichtet. Die Lenkerarme 8 weisen jeweils an einem ersten Ende ein Schwenklager 10, in einem ersten Abstand zum Schwenklager 10 eine Schnittstelle 18 zur Anbindung eines Radträgers 12 an dem jeweiligen Lenkerarm 8 und in einem zweiten Abstand zum Schwenklager 10 einen Tragabschnitt 20 zur Verbindung des jeweiligen Lenkerarms 8 mit einem Federelement 14 auf.

Die Lenkerarme 8 sind auf der den Schwenklagern 10 abgewandten Seite der Radachse R über eine Achsbrücke 22 miteinander verbunden. Die Lenkerarme 8 sind auch im Bereich der Tragabschnitte 20 zur Verbindung des jeweiligen Lenkerarms 8 mit einem Federelement 14 mit der Achsbrücke 22 verbunden. Im mittleren Bereich der Achsbrücke 22 ist eine Befestigungskonsole 24 zur Anbindung von Lenkerstreben 26 ausgebildet. Die Befestigungskonsole 24 ist im gezeigten Ausführungsbeispiel als ein unterhalb der Oberkante der Achsbrücke 22 angeordneter Vorsprung V ausgebildet, der sich in einer Richtung quer zur Erstreckungsrichtung der Achsbrücke 22 erstreckt. An dem Vorsprung V sind Befestigungselemente 28a zur Befestigung von Lenkerstreben 26 ausgebildet, deren Zugrichtung aus einer Ansicht von oben in einem Winkel α < 45° und > 0° zur Erstreckungsrichtung der Achsbrücke 22 ausgerichtet ist.

An dem Vorsprung V sind auf gegenüberliegenden Seiten Befestigungselemente 28a zur Befestigung von Lenkerstreben 26 ausgebildet, an denen auf jeder Seite des Vorsprungs V zumindest jeweils eine Lenkerstrebe 26 drehbeweglich und/oder gelenkig mit dem oder den zugehörigen Befestigungselementen 28a verbunden ist und sich diese Lenkerstrebe 26 vom zugehörigen Befestigungselement 28a aus in der Montage- und Ruhestellung der Achskonstruktion 6 in einem Nutzfahrzeug bis zum Anbindungspunkt der Lenkerstrebe 26 an dem dieser Lenkerstrebe 26 zugehörigen Lenkerarm 8 hin in einem Anstellwinkel erstreckt, der um ein Winkelmaß von der direkten Linie zwischen dem zugehörigen Befestigungspunkt und dem Radmittelpunkt im zugehörigen Rad 16 abweicht.

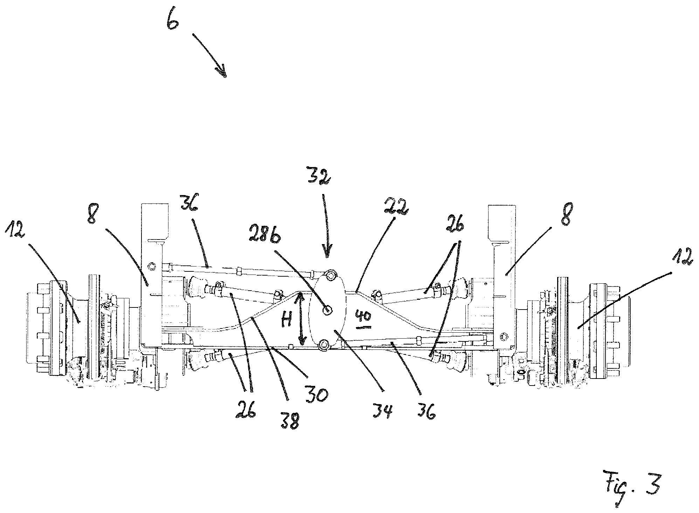

In Fig. 3 ist eine Ansicht auf die Achskonstruktion von hinten gezeigt, allerdings mit einer Schweißkonstruktion der Achsbrücke 22. Der prinzipielle Aufbau und die Anordnung der in dieser Ansicht gezeigten Bauteile zueinander ist aber auf eine Achsbrücke 22 übertragbar, die zumindest teilweise als Gussteil ausgebildet ist. In der Ansicht ist erkennbar, dass die Achsbrücke 22 als eine kastenartig ausgebildete Schweißkonstruktion mit einer Bodenplatte 30, einem Deckblech 38 und zwei Seitenblechen 40 ausgeführt ist. Die Bodenplatte 30 an der Unterseite der Achsbrücke 22 verläuft über die Breite der Achsbrücke 22 hinweg in einer zumindest annähernd gleichbleibenden Ebene. Das Seitenblech 40 und damit die Achsbrücke 22 weisen in ihrem mittleren Abschnitt eine größere Bauhöhe H auf als in den äußeren Randbereichen. An der Achsbrücke 22 ist ein Befestigungselement 28b zur Anbindung eines Spurführungsmittels 32 ausgebildet. Im Ausführungsbeispiel ist das Spurführungsmittel 32 als Wattgestänge ausgeführt. Das Befestigungselement 28b ist eine Welle, auf die die Gelenkplatte 34 drehbar aufgesetzt ist. Mit der Gelenkplatte 34 sind die innen liegenden Enden der beiden Querlenker 36 über Drehgelenke verbunden. Die äußeren Enden der Querlenker 36 sind jeweils mit einem Lenkerarm verbunden. Über das Wattgestänge wird eine Kippbewegung eines Lenkerarms 8 in eine Richtung quer zur Fahrtrichtung auf den anderen Lenkerarm 8 übertragen.

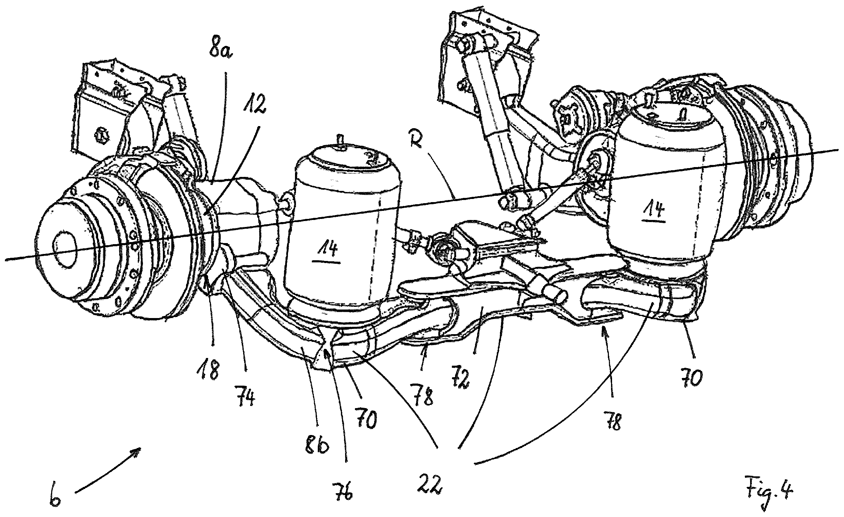

Die Fig. 4 zeigt eine Achskonstruktion 6 aus einer Ansicht von schräg hinten und oben mit einer teilweise als Gussteil ausgeführten Achsbrücke 22. Die in Fig. 4 gezeigte Schweißkonstruktion der Achsbrücke 22 kann durch die in Fig. 4 gezeigte Version ersetzt werden. Die Lenkerarme 8 sind im Ausführungsbeispiel zweiteilig ausgebildet und zumindest auf der den Schwenklagern 10 abgewandten Seite der Radachse R über eine zumindest teilweise als Gussteil ausgebildete Achsbrücke 22 miteinander verbunden. Auch die Lenkerarme 8 sind im gezeigten Ausführungsbeispiel als Gussteile ausgebildet. Der Lenkerarm 8 ist unterteilt in einen vorderen Teil 8a und einen hinteren Teil 8b. Die Schnittstelle 18 zur Anbindung eines Radträgers 12 ist noch Bestandteil des vorderen Teils des Lenkerarms 8a. Der hintere Teil ist an die Lasche 74 und gegebenenfalls weitere Flanschstellen angeflanscht, über die der vordere und hintere Teil 8a, 8b des Lenkerarms 8 miteinander verbunden sind. Die Schnittstelle 76 zwischen dem hinteren Teil 8b des Lenkerarms 8 und dem damit verbundenen Armabschnitt 70 befindet sich im Bereich des bogenförmigen Übergangs vom Lenkerarm 8 zur Achsbrücke 22. Die Achsbrücke 22 weist zwei jeweils als Gussteil gefertigte äußere Armabschnitte 70 sowie einen die äußeren Armabschnitte 70 miteinander verbindenden Mittelabschnitt 72 auf, der im Ausführungsbeispiel als Schweißkonstruktion ausgeführt ist. Die Schnittstelle 76 bildet die Anbindungszone der Achsbrücke 22 an den Lenkerarm 8. Die Armabschnitte 70 sind jeweils über eine Schraubverbindung mit dem Mittelabschnitt 72 fest verbunden. Der Mittelabschnitt 72 hat an seinen den Armabschnitten 72 zugewandten Enden gabelförmige Aufnahmen 78, in denen das dem Mittelabschnitt 72 zugewandte Ende des jeweiligen Armabschnitts 70 gehalten ist. Im Bereich der Schnittstelle 76 ist das Federelement 14 auf den Lenkerarm 8 und die Achsbrücke 22 aufgesetzt. Das Federelement 14 ist auf einen Balgträger 60 aufgesetzt, der mit einem Anbindungselement zur Verbindung mit einem Federelement 14 und einem Anbindungselement zur Verbindung mit der Achsbrücke 22 verbunden ist.

Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise abzuwandeln, um es an einen konkreten Anwendungsfall anzupassen.

### Bezugszeichenliste

- 2: Nutzfahrzeug
- 4: Fahrzeugrahmen
- 6: Achskonstruktion
- 8: Lenkerarm
- 10: Schwenklager
- 12: Radträger
- 14: Federelement
- 16: Rad
- 18: Schnittstelle zur Anbindung eines Radträgers
- 20: Tragabschnitt
- 22: Achsbrücke
- 24: Befestigungskonsole
- 26: Lenkerstreben
- 28: Befestigungselement
- 30: Bodenplatte
- 32: Spurführungsmittel
- 34: Gelenkplatte
- 36: Querlenker
- 38: Deckblech
- 40: Seitenblech
- 60: Balgträger
- 70: Armabschnitt
- 72: Mittelabschnitt
- 74: Lasche
- 76: Schnittstelle
- 200: elektrischer Antriebsstrang
- R: Radachse
- V: Vorsprung
- L: Mittellängsachse

## Patentansprüche

1. Achskonstruktion (6) für ein Nutzfahrzeug-Fahrwerk mit einer Radachse (R), deren räumliche Lage von Drehachsen von zumindest zwei an gegenüberliegenden Seiten der Achskonstruktion (6) angeordneten Rädern (16) bestimmt ist, die Räder (16) sind jeweils über einen Radträger (12) an einem damit verbundenen Lenkerarm (8) gehalten, die Lenkerarme (8) sind entlang der Radachse (R) beabstandet voneinander angeordnet und jeweils in einer Richtung quer zur Radachse (R) ausgerichtet, die Lenkerarme (8) weisen jeweils an einem ersten Ende ein Schwenklager (10), in einem ersten Abstand zum Schwenklager (10) eine Schnittstelle (18) zur Anbindung eines Radträgers (12) an dem jeweiligen Lenkerarm (8) und in einem zweiten Abstand zum Schwenklager (10) einen Tragabschnitt (20) zur Verbindung des jeweiligen Lenkerarms (8) mit einem Federelement (14) auf, **dadurch gekennzeichnet, dass** die Lenkerarme (8) einstückig oder mehrteilig ausgebildet sind und zumindest auf der den Schwenklagern (10) abgewandten Seite der Radachse (R) über eine zumindest teilweise als Gussteil ausgebildete Achsbrücke (22) miteinander verbunden sind.

2. Achskonstruktion (6) nach Anspruch 1, **dadurch gekennzeichnet, dass** die Achsbrücke (22) zumindest zwei jeweils als Gussteil gefertigte äußere Armabschnitte (70) sowie einen die äußeren Armabschnitte (70) miteinander verbindenden Mittelabschnitt (72) aufweist.

3. Achskonstruktion (6) nach Anspruch 2, **dadurch gekennzeichnet, dass** der Mittelabschnitt (72) an seinen den Armabschnitten (72) zugewandten Enden gabelförmige Aufnahmen (78) hat, in denen das dem Mittelabschnitt (72) zugewandte Ende des jeweiligen Armabschnitts (70) gehalten ist.

4. Achskonstruktion (6) nach einer der vorhergehenden Ansprüche, **dadurch gekennzeichnet, dass** die Lenkerarme (8) als Gussteile ausgebildet sind.

5. Achskonstruktion (6) nach Anspruch 4, **dadurch gekennzeichnet, dass** die Lenkerarme (8) jeweils zumindest zweiteilig ausgeführt sind, wobei sich ein jeweiliges vorderes Teil vom Schwenklager (10) bis zur Anbindungszone der Radträger und ein jeweiliges hinteres Teil von der Anbindungszone der Radträger bis zur Anbindungszone der Achsbrücke (22) erstrecken.

6. Achskonstruktion (6) nach Anspruch 4, **dadurch gekennzeichnet, dass** in den hinteren Teilen (8b) der Lenkerarme (8) jeweils ein Anbindungselement zur Verbindung mit einem Federelement (14) und ein Anbindungselement zur Verbindung mit der Achsbrücke (22) integriert sind.

7. Achskonstruktion (6) nach einer der vorhergehenden Ansprüche, **dadurch gekennzeichnet, dass** im Anstoßbereich der Teile (8a, 8b) des jeweiligen Lenkerarms (8), der Achsbrücke (22) und/oder der Radträger (12) mit einem anderen Bauteil der Achskonstruktion (6) eine Schnittstelle ausgebildet ist, über die die Teile nach ihrem Zusammenbau in einer Solllage über eine Schraubverbindung fest miteinander verbunden sind.

8. Achskonstruktion (6) nach einer der vorhergehenden Ansprüche, **dadurch gekennzeichnet, dass** im mittleren Bereich der Achsbrücke (22) eine Befestigungskonsole (24) zur Anbindung von Lenkerstreben (26) ausgebildet ist.

9. Achskonstruktion (6) nach Anspruch 8, **dadurch gekennzeichnet, dass** die Befestigungskonsole (24) als ein unterhalb der Oberkante der Achsbrücke (22) angeordneter Vorsprung (V) ausgebildet ist, der sich in einer Richtung quer zur Erstreckungsrichtung der Achsbrücke (22) erstreckt, wobei an dem Vorsprung (V) Befestigungselemente (28a) zur Befestigung von Lenkerstreben (26) ausgebildet sind, deren Zugrichtung aus einer Ansicht von oben in einem Winkel (α) < 45° und > 0° zur Erstreckungsrichtung der Achsbrücke (22) ausgerichtet ist.

10. Achskonstruktion (6) nach Anspruch 9, **dadurch gekennzeichnet, dass** an dem Vorsprung (V) auf gegenüberliegenden Seiten Befestigungselemente (28a) zur Befestigung von Lenkerstreben (26) ausgebildet sind, an denen auf jeder Seite des Vorsprungs (V) zumindest jeweils eine Lenkerstrebe (26) drehbeweglich und/oder gelenkig mit dem oder den zugehörigen Befestigungselementen (28a) verbunden ist und sich diese Lenkerstrebe (26) vom zugehörigen Befestigungselement (28a) aus in der Montage- und Ruhestellung der Achskonstruktion (6) in einem Nutzfahrzeug bis zum Anbindungspunkt der Lenkerstrebe (26) an dem dieser Lenkerstrebe (26) zugehörigen Lenkerarm (8) hin in einem Anstellwinkel erstreckt, der um ein Winkelmaß von der direkten Linie zwischen dem zugehörigen Befestigungspunkt und dem Radmittelpunkt im zugehörigen Rad (16) abweicht.

11. Achskonstruktion (6) nach einem der vorhergehenden Ansprüche, **dadurch gekennzeichnet, dass** an der Achsbrücke (22) ein Befestigungselement (28b) zur Anbindung eines Spurführungsmittels (32) ausgebildet ist.

12. Achskonstruktion (6) nach Anspruch 11, **dadurch gekennzeichnet, dass** das Befestigungselement (28b) eine Welle zur Verbindung mit einem Wattgestänge ist.

13. Achskonstruktion (6) nach einem der vorhergehenden Ansprüche, **dadurch gekennzeichnet, dass** das Befestigungselement (28b) zur Anbindung eines Spurführungsmittels (32) auf der zur Befestigungskonsole (24) zur Anbindung von Lenkerstreben (26) gegenüberliegenden Seite der Achsbrücke (22) angeordnet ist.

14. Nutzfahrzeug (2) mit einer Achskonstruktion (6) für ein Nutzfahrzeug-Fahrwerk mit einer Radachse (R), deren räumliche Lage von Drehachsen von zumindest zwei an gegenüberliegenden Seiten der Achskonstruktion (6) angeordneten Rädern (16) bestimmt ist, die Räder (16) sind jeweils über einen Radträger (12) an einem damit verbundenen Lenkerarm (8) gehalten, die Lenkerarme (8) sind entlang der Radachse (R) beabstandet voneinander angeordnet und jeweils in einer Richtung quer zur Radachse (R) ausgerichtet, die Lenkerarme (8) weisen jeweils an einem ersten Ende ein Schwenklager (10), in einem ersten Abstand zum Schwenklager (10) eine Schnittstelle (18) zur Anbindung eines Radträgers (12) an dem jeweiligen Lenkerarm (8) und in einem zweiten Abstand zum Schwenklager (10) einen Tragabschnitt (20) zur Verbindung des jeweiligen Lenkerarms (8) mit einem Federelement (14) auf, **dadurch gekennzeichnet, dass** die Achskonstruktion (6) nach den kennzeichnenden Merkmalen der Ansprüche 1 - 13 gestaltet ist.
